# EUROPÄISCHE PATENTANMELDUNG

(11) **EP 4 534 476 A1**
(43) Veröffentlichungstag der Anmeldung: **09.04.2025**
(21) Anmeldenummer: 23020461.2
(22) Anmeldetag: 05.10.2023
(51) Int. Cl.: C01B 3/34, B01D 53/047, C01B 3/50

(54) **VERFAHREN UND ANLAGE ZUR HERSTELLUNG VON WASSERSTOFF**

(71) Anmelder: Linde GmbH, 82049 Pullach (DE)
(72) Erfinder: Maier, Alexander, 82049 Pullach (DE); Leitmayr, Werner, 82049 Pullach (DE); Keller, Tobias, 82049 Pullach (DE)
(74) Vertreter: Fischer, Werner

(57) **Zusammenfassung**

Es wird ein Verfahren (100, 200) zur Herstellung eines Wasserstoffprodukts (15) vorgeschlagen, wobei eine erste Druckwechseladsorption (108) zur Wasserstoffabtrennung gefolgt von einer Kohlendioxidentfernung (110) zur Kohlendioxidentfernung vorgenommen wird und ein verbleibendes Tailgas (19) mittels einer weiteren Druckwechseladsorption (120) bearbeitet wird. Ein in der weiteren Druckwechseladsorption (120) abgetrennter Wasserstoff wird je nach Bedarf verwendet. Eine entsprechende Anlage wird ebenfalls vorgeschlagen.

## Beschreibung

Die Erfindung betrifft ein Verfahren und eine Anlage zur Herstellung von Wasserstoff.

### Hintergrund

Zur Herstellung von Wasserstoff können kohlen(wasser)stoffhaltige Einsätze beispielsweise mittels Dampfreformierung, partieller Oxidation, Autothermreformierung oder einer Kombination dieser Verfahren umgesetzt werden. Bei allen diesen Verfahren fällt Kohlendioxid an. Typischerweise wird das Kohlendioxid mittels einer chemischen oder physikalischen Wäsche oder mittels Druckwechseladsorption aus einem Produktgemisch der genannten Verfahren abgetrennt.

Falls das abgetrennte Kohlendioxid nicht in einem nachfolgenden Prozess, wie beispielsweise zur Produktion von Harnstoff oder Methanol, benötigt und dort umgesetzt wird, wird es herkömmlicherweise an die Atmosphäre abgegeben. Der auf diese Weise hergestellte Wasserstoff wird auch als grauer Wasserstoff bezeichnet.

Neuerdings gewinnt die Gewinnung von sogenanntem blauen Wasserstoff an Bedeutung. Bei dieser wird angestrebt, durch geeignete Verfahrensschritte die Freisetzung von Kohlendioxid an die Atmosphäre soweit wie möglich zu vermeiden. Nach seiner Abtrennung wird das Kohlendioxid dabei typischerweise verdichtet, aufgereinigt und anschließend verflüssigt, bevor es beispielsweise einer Lagerstätte endgelagert wird. Dies wird auch als Sequestrierung bezeichnet.

Es besteht der Bedarf nach Verfahren zur Herstellung von blauem Wasserstoff, die Nachteile bekannter Verfahren zumindest teilweise überwinden.

### Überblick

Es werden ein Verfahren und eine Anlage mit den Merkmalen der unabhängigen Ansprüche vorgeschlagen. Ausgestaltungen sind Gegenstand der abhängigen Ansprüche und der nachfolgenden Beschreibung.

Das vorgeschlagene Verfahren zur Herstellung eines Wasserstoffprodukts umfasst, dass unter Einsatz eines oder mehrerer Bereitstellungsschritte ein erster Prozessgasstrom gebildet wird, der Wasserstoff, Kohlendioxid und eine oder mehrere weitere Kohlenstoffverbindungen enthält, wobei der erste Prozessgasstrom oder ein Teil hiervon unter Erhalt eines zweiten Prozessgasstroms, der gegenüber dem ersten Prozessgasstrom an Wasserstoff angereichert und an Kohlendioxid und an der einen oder den mehreren weiteren Kohlenstoffverbindungen abgereichert ist, sowie eines dritten Prozessgasstroms, der gegenüber dem ersten Prozessgasstrom an Kohlendioxid und an der einen oder den mehreren weiteren Kohlenstoffverbindungen angereichert und an Wasserstoff abgereichert ist, einer ersten Druckwechseladsorption unterworfen wird, wobei der zweite Prozessgasstrom oder ein Teil hiervon als das Wasserstoffprodukt verwendet oder zu diesem aufbereitet wird, wobei der dritte Prozessgasstrom oder ein Teil hiervon unter Erhalt eines vierten Prozessgasstroms, der gegenüber dem dritten Prozessgasstrom an Kohlendioxid angereichert und an Wasserstoff und der einen oder den mehreren weiteren Kohlenstoffverbindungen abgereichert ist, sowie eines fünften Prozessgasstroms, der gegenüber dem dritten Prozessgasstrom an Wasserstoff und der einen oder den mehreren weiteren Kohlenstoffverbindungen angereichert und an Kohlendioxid abgereichert ist, einer Kohlendioxidentfernung unterworfen wird, wobei der fünfte Prozessgasstrom oder ein Teil hiervon unter Erhalt eines sechsten Prozessgasstroms, der gegenüber dem fünften Prozessgasstrom an Wasserstoff angereichert und an der einen oder den mehreren weiteren Kohlenstoffverbindungen abgereichert ist, sowie eines siebenten Prozessgasstroms der gegenüber dem fünften Prozessgasstrom an der einen oder den mehreren weiteren Kohlenstoffverbindungen angereichert und an Wasserstoff abgereichert ist, einer zweiten Druckwechseladsorption unterworfen wird, wobei ein erster Anteil des sechsten Prozessgasstroms oder eines Teils hiervon mit dem siebenten Prozessgasstrom oder einem Teil hiervon als Brenngas zur Durchführung des einen oder zumindest eines der mehreren Bereitstellungsschritte verwendet wird, und wobei ein zweiter Anteil des sechsten Prozessgasstroms mit dem zweiten Prozessgasstrom oder dem Teil hiervon als das Wasserstoffprodukt verwendet oder zu diesem aufbereitet wird.

Mittels des vorgeschlagenen Verfahrens kann einem wasserstoffreichen Heizgasstrom, dem fünften Prozessgasstrom, insbesondere genau so viel Wasserstoff entzogen werden, dass der Heizgasbedarf der Anlage gedeckt wird. Dies wird durch die Bearbeitung des fünften Prozessgasstroms in der zweiten Druckwechseladsorption ermöglicht. Der entzogene Wasserstoff kann, in Form des zweiten Anteils des sechsten Prozessgasstroms, direkt dem Wasserstoffprodukt, d.h. insbesondere dem zweiten Prozessgasstrom, zugeführt werden, wodurch auch die erforderliche Einsatzstoffmenge reduziert wird. Zudem können Rückführströme und die damit verbundene Aufkonzentrierung von beispielsweise Inerten, reduziert oder vermieden werden. Nicht ins Produkt überführter Wasserstoff kann, in Form des ersten Anteils des sechsten Prozessgasstroms, dem Brenngas zugegeben werden.

Die eine oder die mehreren weiteren Kohlenstoffverbindungen kann bzw. können insbesondere Methan und/oder Kohlenmonoxid sein oder umfassen. Es handelt sich also um Verbindungen, aus denen oder unter Verwendung derer Wasserstoff gebildet werden kann, und zwar entweder durch Abspalten von Wasserstoff von dem Molekül, insbesondere im Fall von Methan, oder durch eine Umsetzung mit einem Reaktionspartner, insbesondere im Fall von Kohlenmonoxid mit Wasser bei der Wassergasshift, bei der Wasserstoff und Kohlendioxid gebildet werden.

Durch die Reduzierung von Kreislaufmengen ist es möglich, die am Kreislauf beteiligten Anlagenteile nur für die tatsächlichen Mengen ausgelegt werden, ohne zusätzliche Kreislaufmengen. Dadurch werden diese Anlagenteile ca. 5 bis 20% (je nach Kreislaufmengen) kleiner. Stromverbraucher, wie z.B. Kompressoren, verbrauchen auch entsprechend weniger Strom. Dadurch wird die Zusatzinvestition in die typischerweise kleinere zweite Druckwechseladsorption mehr als gerechtfertigt. Das technische Risiko von Kreislaufen, das insbesondere in der übermäßigen Anreicherung von Inerten besteht, kann vollständig vermieden, der Heizgasbedarf exakt ausbalanciert werden. Dadurch wird der gesamte Einsatzgasbedarf optimiert.

Während in bestimmten Ausgestaltungen der gesamte fünfte Prozessgasstrom der zweiten Druckwechseladsorption unterworfen wird, sehen andere Ausgestaltungen vor, dass nur ein erster Anteil des fünften Prozessgasstroms der zweiten Druckwechseladsorption unterworfen wird und ein zweiter Anteil des fünften Prozessgasstroms unter Erhalt eines gegenüber dem fünften Prozessgasstrom an Wasserstoff angereicherten und an der einen oder den mehreren weiteren Kohlenstoffverbindungen abgereicherten Permeatstroms sowie eines gegenüber dem fünften Prozessgasstrom an der einen oder den mehreren weiteren Kohlenstoffverbindungen angereicherten und an Wasserstoff abgereicherten Retentatstroms einer Membrantrennung unterworfen wird, wobei der Retentatstrom oder ein Teil hiervon als Einsatz in den einen oder zumindest einen der mehreren Bereitstellungsschritte zurückgeführt wird. Der Permeatstrom, oder ein Teil hiervon, kann mit dem Restgas der ersten Druckwechseladsorption, oder einem Teil hiervon, vereinigt und der Kohlendioxidentfernung zugeführt werden. Der enthaltene Wasserstoff landet dadurch im Endeffekt wieder auf der zweiten Druckwechseladsorption und kann dadurch als Produkt gewonnen werden.

Vorteile der zuletzt erläuterten Ausgestaltung umfassen insbesondere, dass der wasserstoffreiche Permeatstrom dem Prozess so wieder zugeführt werden kann, dass der enthaltene Wasserstoff im Endeffekt, d.h. ggf. nach mehreren durchlaufenen Zyklen, wieder auf der zweiten Druckwechseladsorption landet und dem System entzogen werden kann. Der Vorteil ist, dass der Wasserstoff dann nicht dem oder den Bereitstellungsschritten, beispielsweise einer Autothermreformierung oder Wassergasshift, zurückgeführt wird, wo er, bedingt durch die dort stattfindenden Reaktionen, teilweise sogar wieder umgesetzt werden würde. Der produzierte Wasserstoff bleibt damit erhalten. Der wasserstoffarme Retentatstrom mit insbesondere weiteren Kohlenstoffverbindungen, kann dagegen in den Hauptprozess zurückgeführt werden.

Wie bereits eingangs erwähnt, können unterschiedliche Verfahren zur Herstellung von blauem Wasserstoff zum Einsatz kommen. Dies ist auch in den hier vorgeschlagenen Verfahren der Fall. Das vorgeschlagene Verfahren und seine Ausgestaltungen sind also nicht auf eine bestimmte Art der Herstellung beschränkt, d.h. eine oder zumindest einer der mehreren Bereitstellungsschritte können eine Dampfreformierung, eine partielle Oxidation oder autotherme Reformierung umfassen. Ebenso kann eine Einsatzvorbehandlung, eine Vorreformierung und eine Wassergasshift vorgesehen sein. Alle genannten Bereitstellungsschritte sind an sich bekannt, so dass hierzu auf die entsprechende Fachliteratur verwiesen werden kann.

Mittels der ersten und/oder zweiten Druckwechseladsorption kann oder können insbesondere bereits im Wesentlichen reiner Wasserstoff hergestellt werden, der aber auch noch weiteren Prozessschritten unterworfen werden kann. Insbesondere können der zweite Prozessgasstrom und/oder der sechste Prozessgasstrom einen Wasserstoffgehalt von mehr als 90% auf molarer Basis aufweisen, in Beispielen handelt es sich um einen Wasserstoffgehalt von mehr als 90%, 95%, 99%, 99,5% oder 99,9% auf molarer Basis. Entsprechender Wasserstoff kann dann in geeigneter Weise aufbereitet, beispielsweise verflüssigt, verdichtet, unterkühlt usw. werden.

Der vierte Prozessgasstrom kann dagegen einen Kohlendioxidgehalt von mehr als 90% auf molarer Basis aufweisen, insbesondere einen Kohlendioxidgehalt von mehr als 90%, 95%, 99%, 99,5% oder 99,9% auf molarer Basis. Ein entsprechender Kohlendioxidstrom eignet sich in besonderer Weise für eine Sequestrierung oder anderweitige Nutzung. Der fünfte Prozessgasstrom kann dagegen einen Kohlendioxidgehalt von weniger als 10% auf molarer Basis aufweisen, insbesondere einen Kohlendioxidgehalt von weniger als 5%, 1%, 0,5% oder 0,1% auf molarer Basis. Dies ermöglicht eine weitgehende Reduzierung der direkten Kohlendioxidemissionen eines entsprechenden Verfahrens.

In Ausgestaltungen des Verfahrens können beliebige Varianten der Kohlendioxidentfernung vorgesehen sein, beispielsweise kann diese unter Verwendung einer physikalischen Wäsche, einer chemischen Wäsche und/oder einer Adsorption durchgeführt werden. Auch entsprechende Verfahren sind an sich bekannt und in der Fachliteratur vorbeschrieben.

In Ausgestaltungen können der erste und zweite Anteil des sechsten Prozessgasstroms entsprechend einem Heizgasbedarf des Verfahrens eingestellt werden, beispielsweise auf Grundlage eines Drucks in einem Heizgassystem. Auf diese Weise ist eine präzise Abstimmung möglich.

Die vorgeschlagene Anlage zur Herstellung eines Wasserstoffprodukts ist dafür eingerichtet, mittels eines oder mehrerer Bereitstellungsschritte einen ersten Prozessgasstrom zu bilden, der Wasserstoff, Kohlendioxid und eine oder mehrere weitere Kohlenstoffverbindungen enthält, den ersten Prozessgasstrom oder einen Teil hiervon unter Erhalt eines zweiten Prozessgasstroms, der gegenüber dem ersten Prozessgasstrom an Wasserstoff angereichert und an Kohlendioxid und an der einen oder den mehreren weiteren Kohlenstoffverbindungen abgereichert ist, sowie eines dritten Prozessgasstroms, der gegenüber dem ersten Prozessgasstrom an Kohlendioxid und an der einen oder den mehreren weiteren Kohlenstoffverbindungen angereichert und an Wasserstoff abgereichert ist, einer ersten Druckwechseladsorption zu unterwerfen, den zweiten Prozessgasstrom oder einen Teil hiervon als das Wasserstoffprodukt zu verwenden oder zu diesem aufzubereiten, den dritten Prozessgasstrom oder einen Teil hiervon unter Erhalt eines vierten Prozessgasstroms, der gegenüber dem dritten Prozessgasstrom an Kohlendioxid angereichert und an Wasserstoff und der einen oder den mehreren weiteren Kohlenstoffverbindungen abgereichert ist, sowie eines fünften Prozessgasstroms, der gegenüber dem dritten Prozessgasstrom an Wasserstoff und der einen oder den mehreren weiteren Kohlenstoffverbindungen angereichert und an Kohlendioxid abgereichert ist, einer Kohlendioxidentfernung zu unterwerfen, den fünften Prozessgasstrom oder einen Teil hiervon unter Erhalt eines sechsten Prozessgasstroms, der gegenüber dem fünften Prozessgasstrom an Wasserstoff angereichert und an der einen oder den mehreren weiteren Kohlenstoffverbindungen abgereichert ist, sowie eines siebenten Prozessgasstroms der gegenüber dem fünften Prozessgasstrom an der einen oder den mehreren weiteren Kohlenstoffverbindungen angereichert und an Wasserstoff abgereichert ist, einer zweiten Druckwechseladsorption zu unterwerfen, einen ersten Anteil des sechsten Prozessgasstroms oder eines Teils hiervon mit dem siebenten Prozessgasstrom oder einem Teil hiervon als Brenngas zur Durchführung des einen oder zumindest eines der mehreren Bereitstellungsschritte zu verwenden, und einen zweiten Anteil des sechsten Prozessgasstroms mit dem zweiten Prozessgasstrom oder dem Teil hiervon als das Wasserstoffprodukt zu verwenden oder zu diesem aufzubereiten.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen der Erfindung werden nachfolgend rein beispielhaft unter Bezugnahme auf die beigefügte Zeichnung beschrieben, wobei
Figur 1 ein Verfahren gemäß einer Ausgestaltung veranschaulicht,
Figur 2 ein Verfahren gemäß einer weiteren Ausgestaltung veranschaulicht, und
Figur 3 ein Verfahren gemäß einer weiteren Ausgestaltung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt.

Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

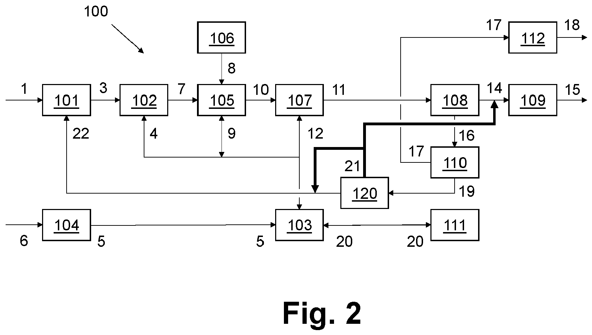

Verfahren zur Herstellung von Wasserstoff sind vielfach in der Literatur beschrieben. Statt vieler sei beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Aus Produktgemischen entsprechender Verfahren abgetrenntes Kohlendioxid wird typischerweise verdichtet, gereinigt, d.h. insbesondere getrocknet, und anschließend entweder in gasförmigem Zustand auf Pipelinedruck verdichtet und/oder verflüssigt und flüssig auf Druck gebracht oder gepumpt und final sequestriert.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff) ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 75, 85, 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 25, 15, 5, 1, 0,1 oder 0,01 % dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Absorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Zuvor und nachfolgend beschriebene Ausgestaltungen können insbesondere die nachfolgend angegebenen Aspekte umfassen:
- Erzeugung von eines wasserstoffreichen Synthesegases mittels Dampfreformer, Autothermreformer oder Partieller Oxidation.
- Konvertierung von Kohlenmonoxid zu Wasserstoff und Kohlendioxid durch die Wassergasshiftreaktion in entsprechenden Reaktoren.
- Abtrennung von Kohlendioxid aus dem erhaltenen Gasgemisch mittels chemischer oder physikalischer Wäsche oder mittels adsorptiven Verfahren, beispielsweise mittels Druckwechseladsorption.
- Somit Erzeugung von blauem Wasserstoff.
- Bei der Erzeugung von blauem Wasserstoff verbleibt ein wasserstoffhaltiges Restgas, das sämtliche nicht umgesetzten Kohlenwasserstoffverbindungen, insbesondere Methan und Kohlenmonoxid, sowie sämtliche Inerte, meist Stickstoff und Argon, und nicht abgetrennte Reste von Kohlendioxid enthält.
- Dieses Restgas wird häufig als Heizgas innerhalb der Anlage zur Herstellung von Wasserstoff verwendet.

Ein wesentliches Kriterium von Anlagen, die blauen Wasserstoff erzeugen, ist die Menge an Restkohlendioxid, die an die Atmosphäre abgegeben wird. Umgekehrt ausgedrückt lautet ein entsprechendes Kriterium, wieviel des Kohlenstoffs, der einer entsprechenden Anlage insgesamt zugeführt wird, letztendlich abgetrennt und nicht an die Atmosphäre abgegeben wird.

In diesem Zusammenhang werden üblicherweise zwei unterschiedliche Kenngrößen verwendet. Oft verwendet wird die Kohlenstoffabtrennrate (Carbon Capture Rate, CCR). Dort wird die Anzahl der abgetrennten Kohlenstoffmoleküle ins Verhältnis gesetzt zu der Anzahl der Kohlenstoffmoleküle, die sich in den Einsatzstoffen der Anlage befinden. Die Angaben erfolgen meist in Prozent.

Etwas detaillierter ist die sogenannte Kohlenstoffintensität (Carbon Intensity, CI). Diese Zahl beschreibt die Menge an Kohlendioxid, die bei der Erzeugung des Wasserstoffproduktes letztendlich in der Atmosphäre landet. Dabei werden auch indirekte Emissionen, wie z.B. durch den Stromverbrauch, berücksichtigt. Diese Größe wir üblicherweise in kg Kohlendioxidäquivalent pro kg Wasserstoff oder in kg Kohlendioxidäquivalent pro (unterem oder oberem) Heizwert angegeben.

Allen Verfahren zur Herstellung von Wasserstoff, die zuvor erwähnt wurden, ist gemeinsam, dass sie einen gewissen Heizgasbedarf besitzen und dass zur Deckung dieses Heizbedarfs ein Restgas verwendet wird, welches zum einen aus dem Verfahren direkt entsteht und zudem möglichst wasserstoffreich sein sollte, um die Kohlenstoffemission an die Atmosphäre zu verringern. Andernfalls entstünde bei der Verbrennung des Heizgases so viel Kohlendioxid, dass moderne Anforderungen and die Kohlenstoffabtrennrate oder die Kohlenstoffintensität ohne zusätzliche Entfernung von Kohlendioxid aus dem Rauchgas nicht eingehalten werden könnten. Diese wäre wiederum ausgesprochen unwirtschaftlich und sollte definitiv vermieden werden.

Allerdings hängt der Heizgasbedarf stark vom gewählten Verfahren zur Herstellung von (blauem) Wasserstoff ab und kann entsprechend variieren.

Eine große Herausforderung ist es, den Heizgasbedarf der Anlage möglichst exakt zu decken, ohne dass ein Überschuss oder eine Unterdeckung auftreten. Es gibt hierzu unterschiedliche Ansätze. Im Folgenden werden kurz einige Beispiele genannt, wobei grundsätzlich unterschieden werden muss, ob die Anlage Heizgas im Überschuss produziert oder nicht. Meist produzieren die Anlagen Restgas (Heizgas) im Überschuss. Hierauf zielen auch hier vorgeschlagene Ausgestaltungen ab.

Überschüssiges Heizgas kann zur Dampferzeugung (entweder durch Vergrößern des Dampfsystems der Anlage oder durch Einsatz eines zusätzlichen Dampferzeugers) verwendet werden. Neben den zusätzlichen Kosten ist die Erzeugung des meist ungewünschten Nebenprodukts Dampf jedoch bisweilen nicht erstrebenswert Überschüssiges Heizgas kann auch in den Hauptprozess rückgeführt werden. Es existieren unterschiedliche Möglichkeiten der Rückführung, beispielsweise vor den Gaserzeugungsschritt wie die Autothermreformierung, vor die Wassergasshift oder vor die Wasserstoffreinigung, beispielsweise die Druckwechseladsorption. Alle Varianten haben den Nachteil, dass der Aufbau eines Kreislaufs immer zur Aufkonzentrierung von Inerten führt und nicht nur dadurch der Hauptprozessweg deutlich größer ausgeführt werden muss und die Energieeffizienz der Anlage schlechter wird.

Hier vorgeschlagene Ausgestaltungen umfassen vor diesem Hintergrund, wie bereits mehrfach zuvor ausgeführt, dass einem wasserstoffreichen Heizgasstrom genau oder im Wesentlichen so viel Wasserstoff entzogen wird, dass der Heizgasbedarf der Anlage gedeckt wird und der entzogene Wasserstoff direkt dem Produkt zugeführt wird, wodurch auch die nötige Einsatzstoffmenge reduziert wird. Zudem werden unnötige Rückführungen und die damit verbundene Aufkonzentrierung von beispielsweise Inerten vermieden, ebenso wie der Verlust von Wasserstoff (durch Rückreaktion), wenn die Rückführung in einen Bereitstellungsschritt erfolgt.

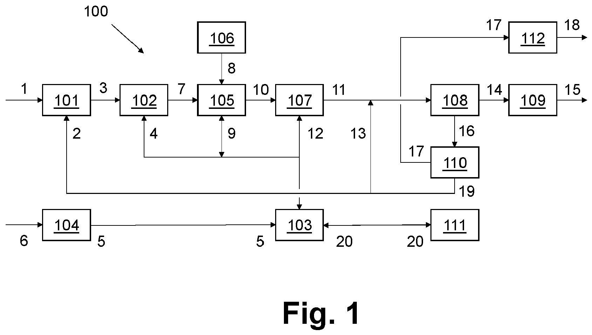

In Figur 1 ist ein Verfahren gemäß einer nicht erfindungsgemäßen Ausgestaltung schematisch veranschaulicht.

Dem Verfahren 100 wird ein kohlenwasserstoffhaltiger Einsatz 1 zugeführt. Der Einsatz 1 wird in einer Einsatzvorbehandlung 101, der auch rückgeführtes Tailgas 2 zugeführt werden kann, in geeigneter Weise vorbehandelt. Ein auf diese Weise erhaltener, vorbehandelter Einsatzstrom 3 wird einer Vorreformierung 102 zugeführt, der auch Dampf 4 aus einem Dampfsystem 103 zugeführt werden kann, welches mit aufbereitetem Wasser 5 aus einer ihrerseits mit Speisewasser 6 gespeisten Wasserbehandlung 104 versorgt werden kann. Dampf 20 kann außerdem mit einer Dampfturbine 111 ausgetauscht werden.

Ein Stoffstrom 7 aus der Vorreformierung 102 wird im dargestellten Beispiel einer Autothermreformierung 105 zugeführt, die mit Sauerstoff 8 aus einer Luftzerlegung 106 gespeist werden und Dampf 9 liefern oder mit solchem versorgt werden kann. Ein Synthesegas 10 aus der Autothermreformierung 105 wird unter Erhalt eines geshifteten Synthesegases 11 einer Wassergasshift 107 zugeführt, die ebenfalls mit Dampf 12 aus dem Dampfsystem 103 betrieben werden kann. Das geshiftete Synthesegas 11, ein zuvor und nachfolgend auch als erster Prozessgasstrom bezeichnet, kann mit weiterem Tailgas 13 vereinigt werden, bevor es einer Druckwechseladsorption 108 zur Gewinnung eines Wasserstoffstroms 14, der unter Erhalt eines verdichteten Wasserstoffprodukts 15 einer Verdichtung 109 unterworfen werden kann, zugeführt wird. Bei dem Wasserstoffstrom wurde, und wird nachfolgend, auch als zweiter Prozessgasstrom bezeichnet.

in der Druckwechseladsorption 108 wird weiters ein Restgas 16 erhalten, zuvor und nachfolgend auch als dritter Prozessgasstrom bezeichnet, das einer Kohlendioxidabtrennung 110 zugeführt wird. Hier abgetrenntes Kohlendioxid 17, zuvor und nachfolgend auch als vierter Prozessgasstrom bezeichnet, kann einer Kohlendioxidspeicherung 112 zugeführt werden, aus der ein Kohlendioxidprodukt 18 abgezogen werden kann. Ein Tailgas aus der Kohlendioxidentfernung 110, zuvor und nachfolgend auch als fünfter Prozessgasstrom bezeichnet, das hier nochmals mit 19 bezeichnet ist, kann in der hier veranschaulichten Ausgestaltung, wie erläutert in Form des Tailgasstroms 2 und/oder 13, rückgeführt werden.

Durch die Rückführung des wasserstoffhaltigen Tailgases aus der Kohlendioxidentfernung 110 in der in Figur 1 veranschaulichten Weise wird ein Kreislauf etabliert. Die Kreislaufmenge richtet sich nach dem Brenngasbedarf. Sie kann bei geringem Brenngasbedarf sehr hoch werden und zu unakzeptabel hohen Konzentrationen von z.B. Inerten führen. Ein weiterer Nachteil ist der Verlust von Wasserstoff (durch Rückreaktion) falls die Rückführung in einen Bereitstellungsschritt der zuvor erläuterten Art erfolgt.

In Figur 2 ist ein Verfahren gemäß einer vorgeschlagenen Ausgestaltung veranschaulicht und insgesamt mit 100 bezeichnet, das entsprechende Nachteile überwindet. Die bereits zuvor zu Figur 1 erläuterten Elemente werden nicht wiederholt beschrieben und sind mit identischen Bezugszeichen angegeben.

Wie in Figur 2 zu dem Verfahren 100 veranschaulicht, wird das Tailgas der Kohlendioxidentfernung 110, also der fünfte Prozessgasstrom, hier einer weiteren, im Verbleich zur Druckwechseladsorption 108 kleineren Druckwechseladsorption 120 zugeführt. Die Druckwechseladsorption 108 wurde, und wird nachfolgend, auch als erste Druckwechseladsorption 108 bezeichnet, die Druckwechseladsorption 120 auch als zweite Druckwechseladsorption. In der zweiten Druckwechseladsorption 120 wird Wasserstoff 21 aus dem Tailgas 19 abgetrennt. Dieser Wasserstoff 21 wurde, und wird nachfolgend, auch als sechster Prozessgasstrom bezeichnet, und, wie mit fett dargestellten Strompfeilen veranschaulicht, zu einem ersten Anteil in den Wasserstoffstrom 14, d.h. letztlich in das Wasserstoffprodukt, und zu einem zweiten Anteil in das als Brenngas verwendete Tailgas 22 der weiteren Druckwechseladsorption 120, überführt. Das Tailgas 22 wurde, und wird nachfolgend, auch als siebenter Prozessgasstrom bezeichnet.

Mit anderen Worten wird der in der weiteren Druckwechseladsorption 120 abgetrennte Wasserstoff teilweise in den Gesamtproduktstrom gefahren, er kann aber auch, je nach Bedarf, zum Brenngas des Tailgases 22 gefahren werden, um den Druck im Brennstoffsystem zu halten. Dadurch wird dem Tailgas 19 genau die Wasserstoffmenge entzogen, die erforderlich ist, dass die Brenngasbilanz aufgeht und kein überschüssiges Brenngas verbleibt.

Wie bereits erwähnt, müssen durch das Vermeiden von Kreisläufen in der in Figur 2 veranschaulichten Ausgestaltung des Verfahrens 100 die am Kreislauf beteiligten Anlagenteile nur für die tatsächlichen Mengen ausgelegt werden, ohne zusätzliche Kreislaufmengen berücksichtigen zu müssen. Dadurch werden diese Anlagenteile ca. 5 bis 20% (je nach Kreislaufmengen) kleiner. Stromverbraucher, wie z.B. Kompressoren verbrauchen auch entsprechend weniger Strom. Dadurch wird die Zusatzinvestition in die kleine zusätzliche Druckwechseladsorption 120 mehr als ausgeglichen. Das technische Risiko von Kreisläufen wird komplett eliminiert. Der Heizgasbedarf kann exakt ausbalanciert werden. Dadurch wird der gesamte Einsatzgasbedarf optimiert.

Die hier vorgeschlagenen Ausgestaltungen können für alle Anlagen zur Herstellung von Wasserstoff mit Kohlendioxidabtrennung 110 (blauer Wasserstoff) eingesetzt werden, solange ein wasserstoffreiches Brenngas oder Tailgas existiert, welches im Überschuss im Vergleich zum Heizgasbedarf der Anlage verfügbar ist.

Dabei ist es irrelevant, welche Technologie zur Erzeugung von Wasserstoff als auch zur Abtrennung 110 von Kohlendioxid verwendet wird. Sämtliche denkbaren Kombinationen sind möglich. Eine Ausgestaltung umfasst beispielsweise, dass nicht die gesamte Menge des wasserstoffreichen Brenngases auf die weitere Druckwechseladsorption 120 gefahren wird, sondern nur ein Teil davon. Der verbleibende Teil kann dann dem Hauptprozess wieder zugegeben werden. Dabei wird der verbleibende Teil entweder vor die Autothermreformierung 105, vor die Wassergasshift 107, oder vor die erste Druckwechseladsorption 110 gefahren. Auch wenn dabei wieder ein Kreislauf mit den oben beschriebenen Nachteilen etabliert wird, so ist dieser Kreislauf dennoch minimiert und unter Umständen (je nach Brenngasbedarf des Fired Heater) sogar erforderlich.

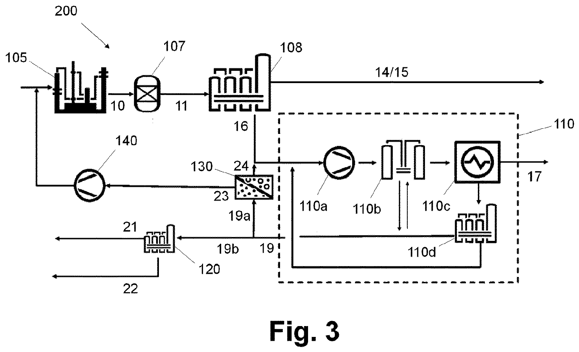

Davon ausgehend wird eine weitere Ausgestaltung vorgeschlagen, die in Figur 3 veranschaulicht und insgesamt mit 200 bezeichnet ist. Die zeichnerische Darstellung der einzelnen Komponenten weicht hierbei ab, wobei die mit identischen Bezugszeichen wie zuvor bezeichneten Komponenten und Stoffströme dieselben oder im Wesentlichen dieselben sein können. Auf eine Darstellung bestimmter Komponenten wie eines Dampfsystems 103, einer Einsatzbehandlung 101, einer Wasserstoffverdichtung 112 und dergleichen wurde lediglich aus Übersichtlichkeitsgründen verzichtet. Diese können auch in dem in Figur 3 dargestellten Verfahren 200 vorhanden sein.

Die Kohlendioxidentfernung 110 ist in Figur 3 detaillierter als zuvor dargestellt. Sie umfasst einen Verdichter 110a, einen adsorptiven Trockner 110b, die eigentliche Reinigung 110c und eine Druckwechseladsorption 11 0d. Der Betrieb ist hinlänglich bekannt. Da es vorliegend nicht auf die ganz konkrete Realisierung der Kohlendioxidentfernung 110 ankommt, wird auf weitere Erläuterungen verzichtet. Es werden jedoch dieselben oder vergleichbare Stoffströme 17 und 19, wie sie bereits zuvor erläutert wurden, gebildet.

Wie hier dargestellt, wird hier ein Teil 19a des Restgases der Kohlendioxidentfernung 110, welcher zurück in den Prozess gefahren wird, einer Membrantrennung 130 unterworfen, um eine Abreicherung des Wasserstoffs in einem Recyclestrom 23 zu erzielen, der als Retentat der Membrantrennung 130 gebildet und mittels eines Verdichters oder Gebläses 140 in die Autothermreformierung 105 zurückgeführt werden kann. Auf diese Weise wird ein wasserstoffreiches Permeat 24 gebildet, welches dem Prozess so wieder zugeführt wird, dass der Wasserstoff im Endeffekt, und über die Kohlendioxidentfernung 110 und den Anteil 19b auf der weiteren Druckwechseladsorption 120 landet und dem System entzogen werden kann.

Der Vorteil ist, dass der Wasserstoff dann nicht zur Autothermreformierung 105 oder zur Shift 107 zurückgeführt wird, wo er, bedingt durch die dort stattfindenden Reaktionen, teilweise sogar wieder umgesetzt werden würde.

## Patentansprüche

1. Verfahren (100, 200) zur Herstellung eines Wasserstoffprodukts (15), bei dem unter Einsatz eines oder mehrerer Bereitstellungsschritte (101, 102, 105, 107) ein erster Prozessgasstrom (11) gebildet wird, der Wasserstoff, Kohlendioxid und eine oder mehrere weitere Kohlenstoffverbindungen enthält, wobei der erste Prozessgasstrom (11) oder ein Teil hiervon unter Erhalt eines zweiten Prozessgasstroms (14), der gegenüber dem ersten Prozessgasstrom (11) an Wasserstoff angereichert und an Kohlendioxid und an der einen oder den mehreren weiteren Kohlenstoffverbindungen abgereichert ist, sowie eines dritten Prozessgasstroms (16), der gegenüber dem ersten Prozessgasstrom (11) an Kohlendioxid und an der einen oder den mehreren weiteren Kohlenstoffverbindungen angereichert und an Wasserstoff abgereichert ist, einer ersten Druckwechseladsorption (108) unterworfen wird, wobei der zweite Prozessgasstrom (14) oder ein Teil hiervon als das Wasserstoffprodukt (15) verwendet oder zu diesem aufbereitet wird, wobei der dritte Prozessgasstrom (16) oder ein Teil hiervon unter Erhalt eines vierten Prozessgasstroms (17), der gegenüber dem dritten Prozessgasstrom (16) an Kohlendioxid angereichert und an Wasserstoff und der einen oder den mehreren weiteren Kohlenstoffverbindungen abgereichert ist, sowie eines fünften Prozessgasstroms (19), der gegenüber dem dritten Prozessgasstrom (16) an Wasserstoff und der einen oder den mehreren weiteren Kohlenstoffverbindungen angereichert und an Kohlendioxid abgereichert ist, einer Kohlendioxidentfernung (10) unterworfen wird, wobei der fünfte Prozessgasstrom (19) oder ein Teil hiervon unter Erhalt eines sechsten Prozessgasstroms (21), der gegenüber dem fünften Prozessgasstrom (19) an Wasserstoff angereichert und an der einen oder den mehreren weiteren Kohlenstoffverbindungen abgereichert ist, sowie eines siebenten Prozessgasstroms (22) der gegenüber dem fünften Prozessgasstrom (19) an der einen oder den mehreren weiteren Kohlenstoffverbindungen angereichert und an Wasserstoff abgereichert ist, einer zweiten Druckwechseladsorption (120) unterworfen wird, wobei ein erster Anteil des sechsten Prozessgasstroms (21) oder eines Teils hiervon mit dem siebenten Prozessgasstrom (22) oder einem Teil hiervon als Brenngas zur Durchführung des einen oder zumindest eines der mehreren Bereitstellungsschritte (101, 102, 105, 107) verwendet wird, und wobei ein zweiter Anteil des sechsten Prozessgasstroms (21) mit dem zweiten Prozessgasstrom (14) oder dem Teil hiervon als das Wasserstoffprodukt (15) verwendet oder zu diesem aufbereitet wird.

2. Verfahren (200) nach Anspruch 1, bei dem ein erster Anteil (19b) des fünften Prozessgasstroms (19) der zweiten Druckwechseladsorption (120) unterworfen wird und ein zweiter Anteil (19a) des fünften Prozessgasstroms (19) unter Erhalt eines gegenüber dem fünften Prozessgasstrom (19) an Wasserstoff angereicherten und an der einen oder den mehreren weiteren Kohlenstoffverbindungen abgereicherten Permeatstroms (24) sowie eines gegenüber dem fünften Prozessgasstrom (19) an der einen oder den mehreren weiteren Kohlenstoffverbindungen angereicherten und an Wasserstoff abgereicherten Retentatstroms (23) einer Membrantrennung (24) unterworfen wird, wobei der Retentatstrom (23) oder ein Teil hiervon als Einsatz in den einen oder zumindest einen der mehreren Bereitstellungsschritte (101, 102, 105, 107) zurückgeführt wird

3. Verfahren (100, 200) nach Anspruch 1 oder 2, bei dem der eine oder zumindest einer der mehreren Bereitstellungsschritte (101, 102, 105, 107) eine Dampfreformierung, eine partielle Oxidation oder autotherme Reformierung (105 oder eine Kombination hiervon ist oder umfasst.

4. Verfahren (100, 200) nach einem der vorstehenden Ansprüche, bei dem der eine oder zumindest einer der mehreren Bereitstellungsschritte (101, 102, 105, 107) eine Einsatzvorbehandlung (101), eine Vorreformierung (102) und eine Wassergasshift (107) ist oder umfasst.

5. Verfahren (100, 200) nach einem der vorstehenden Ansprüche, bei dem der zweite Prozessgasstrom (14) und/oder der sechste Prozessgasstrom (21) einen Wasserstoffgehalt von mehr als 90% auf molarer Basis aufweist.

6. Verfahren (100, 200) nach einem der vorstehenden Ansprüche, bei dem der vierte Prozessgasstrom (17) einen Kohlendioxidgehalt von mehr als 90% auf molarer Basis aufweist und der fünfte Prozessgasstrom (19) einen Kohlendioxidgehalt von weniger als 10% auf molarer Basis aufweist.

7. Verfahren (100, 200) nach einem der vorstehenden Ansprüche, bei dem die eine oder die mehreren weiteren Kohlenstoffverbindungen Methan und/oder Kohlenmonoxid sind oder umfassen.

8. Verfahren (100, 200) nach einem der vorstehenden Ansprüche, bei dem die Kohlendioxidentfernung (10) unter Verwendung einer physikalischen Wäsche, einer chemischen Wäsche und/oder einer Adsorption durchgeführt wird.

9. Verfahren (100, 200) nach einem der vorstehenden Ansprüche, bei dem der erste und zweite Anteil des sechsten Prozessgasstroms (21) entsprechend einem Heizgasbedarf des Verfahrens (100, 200) eingestellt werden.

10. Anlage zur Herstellung eines Wasserstoffprodukts (15), die dafür eingerichtet ist, mittels eines oder mehrerer Bereitstellungsschritte (101, 102, 105, 107) einen ersten Prozessgasstrom (11) zu bilden, der Wasserstoff, Kohlendioxid und eine oder mehrere weitere Kohlenstoffverbindungen enthält, den ersten Prozessgasstrom (11) oder einen Teil hiervon unter Erhalt eines zweiten Prozessgasstroms (14), der gegenüber dem ersten Prozessgasstrom (11) an Wasserstoff angereichert und an Kohlendioxid und an der einen oder den mehreren weiteren Kohlenstoffverbindungen abgereichert ist, sowie eines dritten Prozessgasstroms (16), der gegenüber dem ersten Prozessgasstrom (11) an Kohlendioxid und an der einen oder den mehreren weiteren Kohlenstoffverbindungen angereichert und an Wasserstoff abgereichert ist, einer ersten Druckwechseladsorption (108) zu unterwerfen, den zweiten Prozessgasstrom (14) oder einen Teil hiervon als das Wasserstoffprodukt (15) zu verwenden oder zu diesem aufzubereiten, den dritten Prozessgasstrom (16) oder einen Teil hiervon unter Erhalt eines vierten Prozessgasstroms (17), der gegenüber dem dritten Prozessgasstrom (16) an Kohlendioxid angereichert und an Wasserstoff und der einen oder den mehreren weiteren Kohlenstoffverbindungen abgereichert ist, sowie eines fünften Prozessgasstroms (19), der gegenüber dem dritten Prozessgasstrom (16) an Wasserstoff und der einen oder den mehreren weiteren Kohlenstoffverbindung angereichert und an Kohlendioxid abgereichert ist, einer Kohlendioxidentfernung (10) zu unterwerfen, den fünften Prozessgasstrom (19) oder einen Teil hiervon unter Erhalt eines sechsten Prozessgasstroms (21), der gegenüber dem fünften Prozessgasstrom (19) an Wasserstoff angereichert und an der einen oder den mehreren weiteren Kohlenstoffverbindungen abgereichert ist, sowie eines siebenten Prozessgasstroms (22) der gegenüber dem fünften Prozessgasstrom (19) an der einen oder den mehreren weiteren Kohlenstoffverbindungen angereichert und an Wasserstoff abgereichert ist, einer zweiten Druckwechseladsorption (120) zu unterwerfen, einen ersten Anteil des sechsten Prozessgasstroms (21) oder eines Teils hiervon mit dem siebenten Prozessgasstrom (22) oder einem Teil hiervon als Brenngas zur Durchführung des einen oder zumindest eines der mehreren Bereitstellungsschritte (101, 102, 105, 107) zu verwenden, und einen zweiten Anteil des sechsten Prozessgasstroms (21) mit dem zweiten Prozessgasstrom (14) oder dem Teil hiervon als das Wasserstoffprodukt (15) zu verwenden oder zu diesem aufzubereiten.

11. Anlage nach Anspruch 10, die zur Durchführung eines Verfahrens nach einem der Ansprüche 1 bis 9 eingerichtet ist.
